# EUROPEAN PATENT SPECIFICATION

(11) **EP 2 259 509 B1**
(45) Date of publication and mention of the grant of the patent: **17.08.2011**
(21) Application number: 09161979.1
(22) Date of filing: 04.06.2009
(51) Int. Cl.: H04L 12/56, H04W 72/10

(54) **Method and apparatus for traffic flow differentiation**
Verfahren und Vorrichtung zur Verkehrsflussdifferenzierung
Procédé et appareil pour la différentiation de flux de trafic

(43) Date of publication of application: 08.12.2010
(73) Proprietor: NTT DoCoMo, Inc., Tokyo (JP)
(72) Inventor: Scalia, Luca, 81669, Munich (DE); Aad, Imad, 81245, Munich (DE); Widmer, Joerg, 81539, Munich (DE)
(74) Representative: Betten & Resch

(56) References cited:
- US-A1- 2005 055 592
- WALLENIUS E ET AL: "3G interworking with WLAN QoS 802.11e" VEHICULAR TECHNOLOGY CONFERENCE, 2003. VTC 2003-FALL. 2003 IEEE 58TH ORLANDO, FL, USA 6-9 OCT. 2003; [IEEE VEHICULAR TECHNOLGY CONFERENCE], PISCATAWAY, NJ, USA,IEEE, US, vol. 3, 6 October 2003 (2003-10-06), pages 1803-1806, XP010702459 ISBN: 978-0-7803-7954-1
- ROSSI M ET AL: "SYNAPSE: A Network Reprogramming Protocol for Wireless Sensor Networks Using Fountain Codes" SENSOR, MESH AND AD HOC COMMUNICATIONS AND NETWORKS, 2008. SECON '08. 5TH ANNUAL IEEE COMMUNICATIONS SOCIETY CONFERENCE ON, IEEE, PISCATAWAY, NJ, USA, 16 June 2008 (2008-06-16), pages 188-196, XP031282592 ISBN: 978-1-4244-1777-3
- AFSHIN FALLAHI ET AL: "Distributed and Energy-Aware MAC for Differentiated Services Wireless Packet Networks: A General Queuing Analytical Framework" IEEE TRANSACTIONS ON MOBILE COMPUTING, IEEE SERVICE CENTER, LOS ALAMITOS, CA, US, vol. 6, no. 4, 1 April 2007 (2007-04-01), pages 381-394, XP011172119 ISSN: 1536-1233

## Description

### FIELD OF INVENTION

The present invention relates to a method and an apparatus for traffic flow differentiation.

### BACKGROUND OF THE INVENTION

In today's wireless infrastructure or ad-Hoc legacy 802.11 networks, a user who is simultaneously generating/receiving video/audio traffic and uploading/downloading best-effort traffic (e.g. P2P, FTP) would observe a degradation of the quality of the real-time traffic. Two factors at least contribute to this degradation.

The first factor is the unique hardware transmit queue of legacy 802.11 APs or STAs. Best effort and real-time traffic share the same hardware transmit queue on WLAN devices. Depending on best-effort traffic generation rate, real-time (RT) packets might be queued behind a considerable number of best-effort (BE) ones, thus potentially harming the deadline requirements of time-sensitive applications. Moreover, the limited size of the hardware transmit queue could cause inopportune RT packet droppings if all the queue sots are already occupied. In absence of hardware-level priority-based queue discipline and discarding rules, RT traffic is potentially subject to considerable delay and jitter.

A second factor contributing to the degradation is the high contention between (downlink, uplink) x (RT, BE) packets. Uplink and downlink traffic share the same radio resources. A station (e.g. an AP) in charge of serving all downlink flows will have the same access priority as each station serving its uplink flow. Therefore, all downlink flows have to share approximately an equal number of accesses that one uplink flow may get. In presence of high best effort uplink traffic loads (e.g. P2P file sharing or FTP), this leads to the uplink/downlink unfairness problem (see e.g. Francisco Micó, José Miguel Villalón2 and Pedro Cuenca, Unfairness Uplink/Downlink in IEEE 802.11 WLANs, NAEC, September 2008), with a throughput asymmetry between uplink and downlink flows which advantages the former as the number of flows increases, independently on the use or not of service differentiation mechanisms (e.g. 802.11e). Moreover, although differentiated per-queue medium access parameters (as for example in 802.11e) may reduce the number of contending stations (only a subset of MAC entities is allowed to access certain time slots), in saturated traffic scenarios the probability that in every time slot at least one low-priority station reaches its back-off counter deadline becomes very high, thus reducing the number of virtually protected time slots and in general, the effectiveness of 802.11e traffic prioritization.

A number of solutions have been already proposed for flow-level service differentiation. Most of them however use non 802-11 standard compliant mechanisms that impede their practical deployment in commercial devices. Moreover, none of them is able to explicitly address the problem of reducing the number of contending users or the lack of a packet queuing/discarding discipline at WLAN hardware level. The IEEE 802.11e amendment has been shown to not be able to cope with these issues, and also presents the same impairments related to unfair uplink/downlink resource repartition as evidenced for legacy IEEE 802.11 WLANs.

From a practical perspective, one option that is commonly used is to limit bandwidth-hungry applications in favour of delay-sensitive ones. This is the usual case of a casual P2P user starting a SKYPE/MSN video/audio call. Depending on the available wireless bandwidth, the user or the operating system may have to reduce the bandwidth required by the P2P application in order to improve the quality of his video/audio communication. This approach is inconvenient in two different aspects:
First of all, it requires a manual intervention from the user; and secondly it requires that the WLAN device is operated in the context of a traffic shaping capable operating system that favours video/audio traffic over low priority one.

It is therefore desired to have an improved mechanism for service level differentiation.

WALLENIUS E ET AL: "3G interworking with WLAN QoS 802.11e" VEHICULAR TECHNOLOGY CONFERENCE, 2003. VTC 2003-FALL. 2003 IEEE 58TH ORLANDO, FL, USA 6-9 OCT. 2003; [IEEE VEHICULAR TECHNOLOGY CONFERENCE], PISCATAWAY, NJ, USA, IEEE, US, vol. 3, 6 October 2003 (2003-10-06), pages 1803-1806, discloses an 802.11e station which provides QoS functionality. A single station can have up to eight transmission queues realised as virtual stations inside a station, with QoS parameters that determine their priorities. In case of an internal virtual collision a scheduler grants the transmission opportunity to the traffic channel with the highest priority.

ROSSI M ET AL: "SYNAPSE: A Network Reprogramming Protocol for Wireless Sensor Networks using Fountain Codes" SENSOR, MESH AND AD HOC COMMUNKICATIONS AND NETWORKS, 2008. SECON ' 08. 5TH ANNUAL IEEE COMMUNICATIONS SOCIETY CONFERENCE ON, IEEE; PISCATAWAY; NJ; USA; 16 June 2008 (2008-06-16), pages 188-196, discloses a network reprogramming protocol for wireless sensor networks. It is disclosed that the senders with a higher number of potential receivers are assigned higher priority, and sleeping modes are also used to reduce energy consumption. A sender can go to sleep when a neighbour with higher priority has data to send.

### SUMMARY OF THE INVENTION

The present invention is defined in the independent claims. The dependent claims define embodiments of the invention.

According to one embodiment there is provided a method for differentiating a plurality traffic flows according to their priority, said flows sharing one physical network device which communicates with one or more other devices in a wireless network , said method comprising:
providing a plurality of virtual network devices which split said one physical network device into said plurality of virtual network devices;
mapping the plurality of traffic flows onto the plurality of different virtual network devices, respectively;
putting one of said virtual network devices which corresponds to a flow having a lower priority into a sleep mode or doze mode or power save mode to thereby reduce the impact which the traffic flow having lower priority has on the traffic flow having higher priority.

By using network virtualization and putting the low priority network virtual device into the power save mode a traffic flow differentiation can be achieved which avoids the negative impact of the low priority flow on the high priority flow.

According to one embodiment the method further comprises:
monitoring or checking any parameter which is indicative of the high priority flow being affected by the low priority flow to such an extent that the virtual network device should be put into the power save mode.

By watching a parameter which is indicative of the need for traffic shaping the operation of the mechanism can be limited to those periods where there is indeed a negative impact on the high priority flow, this avoiding any effect on the low priority flow during the other periods.

According to one embodiment said parameter comprises one or more of the following: the queuing delay of the high priority flow;
the number of collisions in said network device.

These are suitable parameters which can indicate that the high priority flow is negatively affected such that it makes sense to perform a traffic shaping.

According to one embodiment the method further comprises:
entering the power save mode or sleep more or doze mode by said remote virtual network device in response to the detection by a remote virtual network device which corresponds to a low priority traffic flow that the virtual network device of said plurality of virtual network devices has already entered the power save mode or sleep more or doze mode.

In this manner there can be implemented a collaborative approach where other remote virtual network devices contribute to the traffic shaping to thereby further reduce the negative effect of the low priority flows on the high priority flow.

According to one embodiment said plurality of virtual network devices is generated in response to one, any, or any combination of the following:
whenever a real-time application is started;
whenever the first real-time packet is generated;
whenever high-priority traffic sharing the hardware transmit queue with low-priority traffic experiences excessive delays;
whenever a parameter indicative of a high priority flow being affected by a low priority flow which shares the same hardware queue exceeds a certain threshold.

In this way the virtual network devices do not need to be provided all the time but only if they are actually needed.

According to one embodiment the method further comprises:
transmitting by the virtual network device corresponding to the low-priority flow a message to its communication partner or to other remote virtual network devices indicating that it is in or goes into the power save mode or sleep more or doze mode.

In this way a virtual network device may actively trigger other (remote) virtual network devices to contribute to the traffic shaping.

According to one embodiment there is provided an apparatus for differentiating a plurality traffic flows according to their priority, said flows sharing one physical network device which communicates with one or more other devices in a wireless network , said apparatus comprising:
a module for providing a plurality of virtual network devices which split said one physical network device into said plurality of virtual network devices;
a module for mapping the plurality of traffic flows onto the plurality of different virtual network devices, respectively;
a module for putting one of said virtual network devices which corresponds to a flow having a lower priority into a sleep mode or doze mode or power save mode to thereby reduce the impact which the traffic flow having lower priority has on the traffic flow having higher priority.

In this manner an apparatus acting as an embodiment of the invention can be implemented

According to one embodiment the apparatus further comprises:
a module for monitoring or checking any parameter which is indicative of the high priority flow being affected by the low priority flow to such an extent that the virtual network device should be put into the power save mode.

According to one embodiment said parameter comprises one or more of the following: the queuing delay of the high priority flow;
the number of collisions in said network device.

According to one embodiment the apparatus further comprises:
A module for entering the power save mode or sleep more or doze mode by said remote virtual network device in response to the detection by a remote virtual network device which corresponds to a low priority traffic flow that the virtual network device of said plurality of virtual network devices has already entered the power save mode or sleep more or doze mode.

According to one embodiment said plurality of virtual network devices is generated in response to one, any, or any combination of the following:
whenever a real-time application is started;
whenever the first real-time packet is generated;
whenever high-priority traffic sharing the hardware transmit queue with low-priority traffic experiences excessive delays;
whenever a parameter indicative of a high priority flow being affected by a low priority flow which shares the same hardware queue exceeds a certain threshold.

According to one embodiment the apparatus further comprises:
A module for transmitting by the virtual network device corresponding to the low-priority flow a message to its communication partner or to other remote virtual network devices indicating that it is in or goes into the power save mode or sleep more or doze mode.

According to one embodiment there is provided a computer program comprising computer program code which when being executed on a computer enables said computer to carry out a method according to one of the embodiments of the invention.

### DESCRIPTION OF THE DRAWINGS

Fig. 1 schematically illustrates a queing mechanism according to the prior art.
Fig. 2 schematically illustrates the operation of an embodiment of the present invention.
Fig. 3 schematically illustrates the operation of a further embodiment of the present invention.
Fig. 4 illustrates the effect of an embodiment of the present invention

### DETAILED DESCRIPTION

Before embodiments of the invention will be explained, at first some terms which will be used in the description are clarified.
- *AP*: *Access Point*
- *STA*: *Station*
- *ATIM*: *Announcement Traffic Indication Map*
- *DTIM*: *Delivery Traffic Indication Map*
- *DCF*: *Distributed Coordination Function*
- *DHCP*: *Dynamic Host Configuration Protocol*
- *DSL*: *Digital Subscriber Line*
- *MAC*: *Medium Access Control*
- *PSPM*: *Power Save Polling Mode*
- *QoS*: *Quality of Service*
- *OS*: *Operating Systems*
- *WLAN*: *Wireless Local Area Network*
- *BE*: *Best Effort*
- *RT*: *Real Time*

The solution in accordance with an embodiment of the invention introduces a traffic classification mechanism and a rate limiting policy ensuring that the queuing differentiation and management processes happen directly in the wireless device driver rather than in the OS protocol stack.

To achieve this goal, traffic flows are split onto multiple independent virtual network interfaces and temporarily put in doze mode the ones delivering best effort traffic. In one embodiment, the amount of time in which the virtual interface is put in doze mode depends on the low priority rate reduction to be achieved in order to favour delay sensitive applications.

The use of power saving techniques to manage different wireless interfaces is not new in the 802.11 wireless extent. The first idea appeared in October 2005 on the HostAP mailing list in a email thread entitled "Virtual WiFi" (see Virtual Wifi email thread. http://lists.shmoo.com/pipermail/hostap/2005-October/011759.html). The discussion was basically focused on how to stay simultaneously connected to multiple APs possibly operated on different channels by using a single network interface card. Before entering power save mode, one virtual station announces the sleeping time to its serving AP and enters doze state. This allows to seamlessly handover to the other local virtual station simultaneously running on top of the same network hardware. After resuming from the previous doze state, this virtual station recovers its frames from the AP it was associated with by leveraging power save mechanism and related remote storage features.

This idea has been again presented in a research paper from Katabi et. al.(see Srikanth Kandula, Kate Lin, Tural Badirkhanli, Dina Katabi, FatVAP: Aggregating AP Backhaul Bandwidth NSDI, 2008), and in new commercial products recently advertised by a mobile operator (see). In Katabi et al., the authors simultaneously connect one wireless network interface to multiple APs in order to utilize all the available bandwidth resources not completely used at some of these APs.

Similarly, Microsoft Research has proposed the Virtual WiFi tool for wireless 802.11 drivers running on Windows OS (see e.g. MS Virtual WiFi Project. http://research.microsoft.com/en-us/um/redmond/projects/virtualwifi). The goal of Virtual Wifi is to allow users to switch between networks transparently to the applications, as if they were connected to multiple wireless networks simultaneously. Virtual WiFi is implemented as an NDIS intermediate driver, and a user-level service in Windows XP. Virtual WiFi interacts with the card device driver at the lower end, and network protocols at the upper end. The buffering protocol is implemented in the kernel and the switching logic is implemented as a user-level service. The ClubADSL proposal by Telefonica R&D (see e.g. http://www.tid.es/en/current-events/news/clubadsl-makes-it-possible-to-share-adsl-with-neighbours-to-increase-capacity) applies this approach in the Linux OS with Atheros-based WLAN devices.

In the mechanism according to the embodiments of the present invention, however, the purpose and the way of combining power save and network interface virtualization is completely different from the prior art approaches. Network virtualization in he embodiments of the invention is used to decrease channel contention and transmit queue delay due to lack of multi-queue and/or QoS capabilities at legacy APs or STAs, without affecting best-effort traffic or changing the standard 802.11 access mechanism.

To protect high-priority traffic from low-priority traffic, according to one embodiment there are leveraged power save mode capabilities of WLAN APs or ad-hoc STAs. The user's network device is split into two (or more) virtual network devices. Virtualization allows to present each virtual network device as an independent network interface with a specific physical address at the OS level. IP addresses are thus assigned independently at each of a plurality of instantiated virtual MACs (or virtual MAC layers) which are created for one physical network resource or PHY resource. For example there may be used one physical network resource such as a network IC card or network interface or physical network device, and by virtualization there are created two (or more) MAC layers on top of the single shared PHY layer used by the single network interface or network card. The IP address assignment for the multiple MAC layers may be carried out according to DHCP rules or based on manual network configuration. One may say that each of the virtual MAC layers together with the (shared) PHY layer forms a separate virtual station (or virtual network device) which is seen by the operating system as if there were a separate network cards, one for each virtual MAC layer. Such a virtual station may also be called a virtual MAC entity or virtual network device.

One may therefore say that in embodiments of the invention a plurality virtual stations (or virtual network devices) is created, each of which comprises a virtual MAC layer which has been created for a PHY layer (physical layer) or PHY resource which is shared by the plurality of virtual MAC layers. Such multiple virtual MAC layers (or virtual network devices or virtual stations) are then seen by the operating system OS as if there were a plurality of physical network resources, such as network interfaces or network IC cards. The OS may therefore assign different IP addresses to these virtual Mac layers (which may themselves be identified by different virtual MAC addresses). For the layers above the MAC layer it looks like there were multiple physical network devices which are separately addressable, while in reality there is only one physical network device and only one PHY layer which is shared by the multiple virtual MAC layers. Virtual stations or APs therefore comprise MAC and PHY, two virtual stations share one PHY and their respective MAC instantiations (or virtual MAC layers) are respectively unique and seen by the operating system as separate and different which may be assigned different addresses, e.g. different IP addresses.

According to one embodiment a MAC management entity (or "virtual network device management module") is used to manage the instantiated virtual MACs (or virtual network devices) . In one embodiment, this MAC management entity can be integrated in the MLME module of 802.11 MAC. Alternatively, it can be implemented as a separate module acting on top of virtual interfaces.

The MAC management module in one embodiment is responsible to map different traffic flows onto a specific virtual stack on the basis of their QoS requirements. In one embodiment, there can be instantiated one virtual network interface per each traffic flow present on the device.

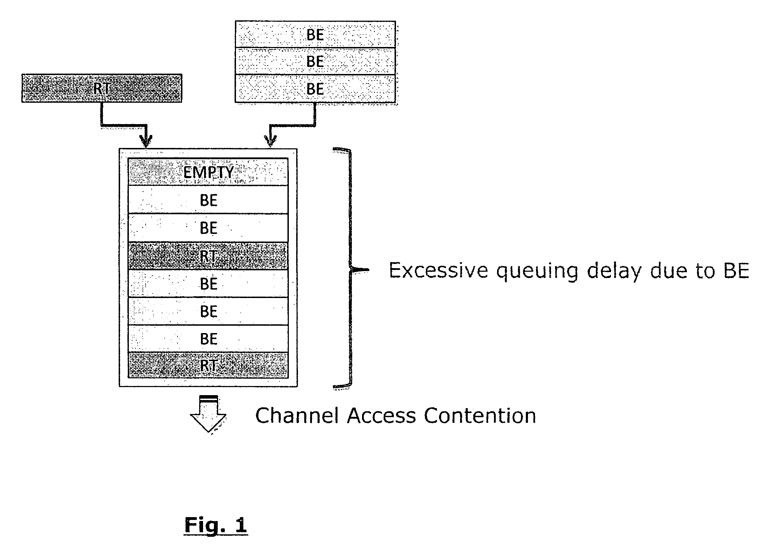

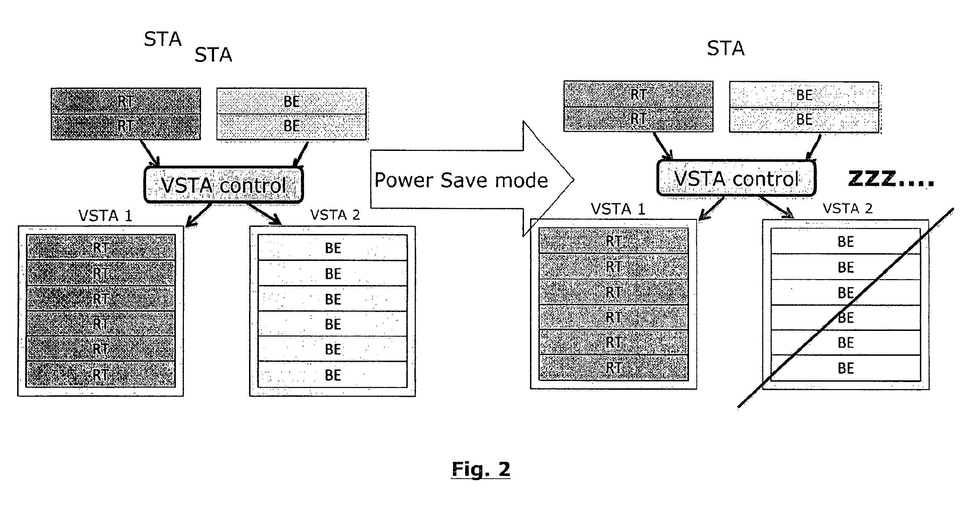

This mechanism according to one embodiment will now be further explained in connection with Figs. 1 and 2. Fig. 1 illustrates the single input queue of a network device (or MAC layer) according to the prior art. Two flows, one consisting of real-time (RT) packets and the other one consisting of best effort (BE) packets contend for entering the queue which, in the case of Fig. 1, has just one empty slot. Since there is no way of flow differentiation, there may be introduced an excessive queing delay due to best effort packets which - in connection with the limited queue size - may cause RT packets to miss their deadline and get dropped.

To avoid this situation, an embodiment of the invention operates as depicted in Fig. 2. There are provided two virtual MAC layers or virtual stations (VSTA1 and VSTA2) each of which comprises a virtual MAC layer and which both share the same PHY layer. In this way there are provided two separate input queues instead of only one, and the two flows (RT and BE) can be (and are) directed to respectively different virtual MAC layers, the RT flow to the left virtual MAC layer, and the BE flow to the one depicted on the right hand side. The two virtual stations then contend for the channel access through the same physical network resource, i.e. the same PHY layer or PHY instantiation. From the point of view of the operating system the mechanism is seen as if there were multiple network interfaces or network cards (one for each MAC layer), while actually physically there is only a single network interface or network interface card (NIC) which is used for accessing the network. , e.g. by using the same network interface card (NIC). The multiple virtual stations or virtual APs, however, look to the operating system as if they were really physically different multiple network interfaces or "stations" or "APs" or network cards.

It should be noted that in one embodiment, when generating the virtual MAC layers the necessary queues for storing packets are instantiated at the MAC layer. The PHY-layer, which is shared among the different virtual MAC instances, does not provide any queuing, but instead each virtual MAC instance (or virtual MAC layer) provides the set of necessary of queues to store packets.

The two virtual network devices are provided "on the top" of the single "real network device", in other words for really accessing the channel on the physical layer there is used only a single (real) network device, but on the MAC layer, through network device virtualization, it appears as if there were two network devices with separate queues.

For providing these virtual stations the known virtualization techniques may be used, however, contrary to any approaches of the prior art they are used to achieve a traffic flow differentiation according to the priority of the flows.

Once the virtual MACs are instantiated, the operating system sees as many Network Interface Cards (NICs) as MAC layers are present. If 10 (virtual) MAC layers are present, the OS assumes that 10 interface cards are present, independently if they actually share the same network hardware or not. Then, the OS provides each virtual Station with a different IP address. Routing to the different virtual MAC layers can thus achieved by the normal/legacy IP routing scheme implemented in the OS kernel (i.e. route flow A to IP_A and flow B to IP_B).

According to one embodiment, there is provided a management module for the plurality of virtual stations or virtual MAC layers for the management of the Virtual STAs. While it is actually not necessary for the routing" the management module, however, performs a mapping to map the different traffic flows onto the respective (correct) virtual network devices or virtual MAC layers. The VSTA management module in one embodiment is a module which is located between the IP layer and the virtual MACs that just lets the packets go through to the correct Virtual Station. In addition to the mapping, according to one embodiment its role is to manage/control the power save mode of those virtual STAs that are taking too much bandwidth thus penalizing the real time traffic.

The mechanism according to one embodiment will now be further explained in connection with Fig. 2. As shown in Fig. 2, there is provided a virtual network device (or virtual station VSTA) management module (VSTA module) which maps the two traffic flows onto the corresponding virtual network devices or virtual MACs (see left-hand side of Fig. 2). The management module (VSTA management) therefore fulfils a mapping function by directing the flows to the respective virtual network devices. According to one embodiment the virtual network devices can have assigned different addresses, and then the mapping may be done using these different addresses. In this way, for the communication peer (e.g. an access point with which the physical network device (the network interface card) being e.g. located in a user's laptop communicates) it seems as if it were communicating with two different network devices having different addresses. Similarly, for an application running on the laptop of for the operating system, it appears as if the laptop had two physical network devices or network cards.

Therefore, according to one embodiment, the radio channel (or channels) is accessed through one physical network device (which may e.g. a network card, a network IC card, or a network interface) by using one PHY instantiation or PHY layer which is shred by a plurality of virtual MAC layers. Each of the plurality of virtual MAC layers together with their shared PHY layer thereby forms a different virtual station (or virtual AP or virtual network device) which are seen by the OS as if there were different physical network devices.

One may say that in one embodiment the physical network device (the network IC card or network interface) is "split" into virtual network devices or virtual stations or virtual APs by the generation of virtual MAC layers. The virtual stations share the same PHY resource but are seen form the OS as if there were a plurality of physical network devices or network cards, while actually there is only one of them which by virtualization is "split" into virtual network devices.

The management module according to one embodiment is capable of putting one of the virtual network devices (temporarily) into a sleeping mode or a power save mode or a doze mode. This is schematically illustrated on the right hand side of Fig. 2 (by the "zzzz..."). In this way the management module improves the channel access conditions for the flow whose virtual network device was not put into power save mode, and therefore in this way it becomes possible to perform a flow differentiation according to the priority of the flows. E.g. if one of the flows is a RT flow (high priority) and one is a BE flow (low priority), the management module may put the virtual station corresponding to the BE flow into the sleep mode so that only RT packets are transmitted. This causes the peer (e.g. the access point) to direct all packets belonging to the BE flow into the power save queue (which is a standard feature for 802.11 devices), and only the RT packets are forwarded to the virtual station which correspond to the RT flow. Similarly, on the side of the two virtual network devices (e.g. the laptop of the user) the BE packets are stored in a queue and are not forwarded to the virtual network device corresponding to the BE flow as long as this virtual network device is in the power save mode. Instead, only RT packets are forwarded to the corresponding virtual network device (VSTA1 in Fig. 2) and therefore the packets of this flow have better channel access conditions.

In other words, to reduce the impact of the best-effort traffic on the real-time one, the MAC management module can force the virtual station responsible for best-effort traffic to go in doze mode, thus leaving all the available hardware and radio resources to the virtual station delivering real-time traffic. Thereby the virtual MAC instances and power save commands for BE traffic can save hardware resources in favour of RT traffic, while reducing local and global channel contention levels.

The skilled person will recognize that the mechanism described before cannot only be used to differentiate between flows of RT and BE traffic but between any flows having different priorities.

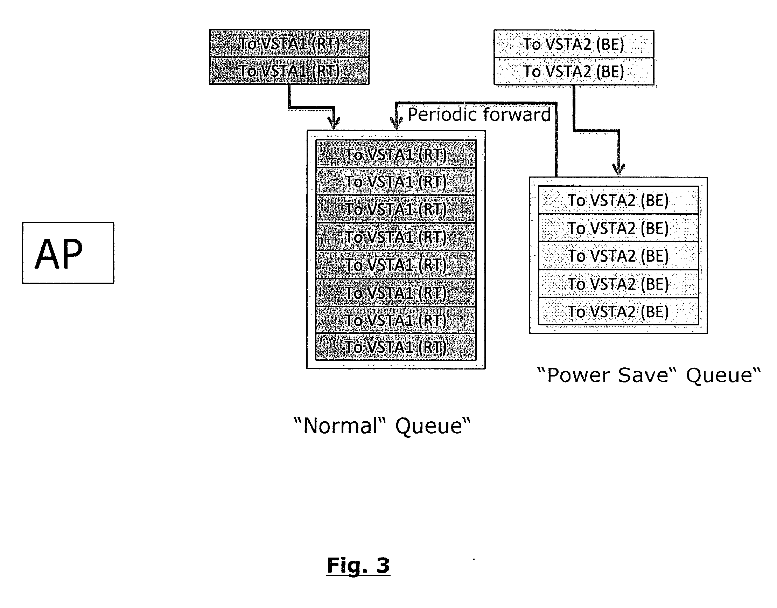

According to one embodiment packet loss for best effort traffic is prevented thanks to power save rules that guarantee the remote AP or Ad-Hoc STA to buffer new incoming BE frames by using power save queues present on WiFi-compliant APs or STAs. Figure 3 shows the direct consequence of power save mode as initiated by BE stations at legacy APs or Ad-Hoc master STAs. For that purpose Fig. 3 depicts the queuing at a legacy APs or Ad-Hoc master STA. As visible, RT traffic will be normally queued at the AP MAC queue, while BE traffic will be temporarily saved on the Power Save queue of the AP for postponed forwarding. This continues as long as the virtual network device corresponding to the BE flow is in power save mode. Once it returns to normal operation, the BE packets form the power save queue are inserted into the "normal" queue. The whole mechanism of putting a virtual device into power save mode, queuing the corresponding packets in the power save queue, fetching the virtual device back to normal operation and then inserting the queued packets into the normal queue may occur periodically or from time to time, depending on how strong the BE traffic affects the RT traffic.

With the described mechanism there can be achieved service differentiation (different throughput, delay) in infrastructure and ad-hoc (wireless) networks where APs or STAs do not necessarily provide QoS support. The invention also applies to those apparatuses supporting 802.11e service differentiation mechanisms, which by default do not provide any mechanism able to avoid internal traffic collisions or to reduce overall channel access contention. The mechanism helps improving the quality of high-priority traffic (e.g. video or voice) by reducing the impact of low-priority ones (e.g. P2P, ftp).

The skilled person will readily recognize that although along this description reference is made to two virtual stations, the embodiments of the invention can be easily generalized to any number of virtual stations instantiated on top of the same hardware.

In one embodiment the mechanism comprises splitting the 802.11 network hardware into 2 virtual MAC instances sharing the same PHY. Mainline Linux kernel exposes an 80211 MAC API which already supports this functionality, thus opening the deployment of this solution to all wireless network devices whose drivers are developed according to these APIs. A list of all available network devices using the MAC80211 Linux API is present on linuxdrivers.com. Network hardware virtualization is also possible on Windows OS through specific experimental APIs (see e.g. Virtual Wifi email thread, http://lists.shmoo.com/pipermail/hostap/2005-October/011759.html).

In one embodiment both virtual stations are supposed to be connected to the same AP or IBSS. However, the mechanism can also be applied to virtual stations connected to different APs or Ad-Hoc STAs possibly operated on different channels.

According to one embodiment network interface virtualization techniques ensure that virtual stations are assigned different MAC addresses, thus allowing different IP addresses assignation to each of them. A MAC management module built on top of virtual stations then assigns them different traffic flows according to their priority.

In one embodiment, the assignation policy can map all the low-priority traffic on virtual station 1 and high-priority traffic to virtual station 2. Then, according to one embodiment the management module checks whether there is a condition which requires traffic shaping by putting the low priority flow virtual network device into power save mode. Such a condition may e.g. be judged to be present whenever an high queuing delay is reported for the virtual station corresponding to the high priority flow. For example the management module may monitor the queuing delay and then check whether a certain (predetermined) threshold has been reached. If this is the case, the management module then puts the virtual device corresponding to the low priority traffic into power save mode by issuing a corresponding command.

Referring now again to Fig. 2, the management module can put virtual station 1 (VSTA1) in power save mode, thus forcing the related peer (AP or Ad-Hoc STA) to periodically buffer the (low-priority) frames arriving during the sleep period. This approach has the advantage of:
- reducing the delay experienced of high-priority frames. This technique avoids these frames to be queued behind BE ones during virtual station 1 sleeping period.
- reducing the contention level on the wireless channel caused by BE frames. The contention level can be further reduced for example other remote virtual devices, after detecting the presence of sleeping stations through the Infrastructure or Ad-Hoc beacon frames, enter, if possible, the doze state. A remote virtual device may recognize from such a beacon frame that a virtual network device has already entered the power save mode, and then the remote virtual network device (which corresponds to a low priority level traffic flow) may do the same (if possible) to thereby reduce the contention level further.

In the foregoing embodiment the condition which triggers the power save mode was the queuing delay. However, the condition whether a traffic shaping is required may also be judged based on any other parameter or parameters indicating that the high priority traffic flow is affected by the low priority traffic flow to such an extent that the low priority traffic flow should be put into the power save mode. For example, if 802.11e capable STAs are used, the mechanism can be also triggered by an excessive number of internal collisions. The management module may therefore monitor or check any parameter which is indicative of the high priority flow being affected by the low priority flow to such an extent that the virtual network device should be put into the power save mode.

According to one embodiment the virtual network devices are not existing already before any flow starts, but instead are generated in response to one or more triggering events. In one embodiment any or any combination of the following three events may trigger the creation of a new virtual network instance:
- whenever a real-time application is started, or
- whenever the first real-time packet is generated, or
- whenever high-priority traffic sharing the hardware transmit queue with low-priority traffic experiences excessive delays
- whenever a parameter indicative of a high priority flow being affected by a low priority flow which shares the same hardware queue exceeds a certain threshold.

In the following the operation of an embodiment at the side of the station where the virtual network devices are provided will be explained.

According to one embodiment the new virtual MAC layer instance is generated then, with a unique MAC address. IP address assignation can be regulated either using DHCP or in a static manner. Traffic mapping at the MAC management module (virtual network device management module) in one embodiment inspects the ToS field in the IP packet header in order to opportunely map to a specific virtual MAC instance. Other ways of identifying whether a packet belongs to a high priority flow or a low priority flow may, however, also be used.

In case a frame is not clearly identifiable as RT or BE, such in the case of encapsulation, streaming/flash/http, different ways of how the assignment can be made can be imagined. A very simple approach in such a case could be to direct those frames to the default destination (e.g. low priority flow), but other less straight-forward mechanisms may also be used in such a case.

Whenever real-time traffic suffers from queuing delay - or in case of 802.11e stations, of excessive internal collisions, the MAC management entity module in one embodiment may force the low-priority virtual MAC instance to issue a unicast message to its communication partner (the AP or its Ad-Hoc peer) indicating that is in or goes into the power save mode (e.g. a message with the power save bit enabled).

In one embodiment, when collaborative mechanisms are implemented, a station with a single RT traffic queue can reduce channel access delay by triggering remote stations (or remote virtual network devices) to enter the sleeping mode by delivering a message indicating that it is or goes into the power save mode. E.g. a power save frame can be delivered from a virtual MAC instance which is temporarily activated for such a purpose.

According to one embodiment stations recognizing the presence of other clients in sleeping mode (upon overhearing real-time frames sent by other stations or exchanging control packets between stations to inform about each other's traffic priorities) can thus collaboratively enter the doze mode in order to temporarily reduce the collision rate on the channel.

In the following the operation of an embodiment at the side of the AP or Ad-Hoc peer will be explained.

At the AP or Ad-Hoc peer, each physical station is seen as two (or eventually more) different and independent ones due to the virtualization of the physical station into a plurality of virtual network device with two (or more) different IP/MAC addresses. Virtualization is then transparent to the other peers. AP or Ad-Hoc remote peer operations do not require any modifications and are not affected by the mechanism.

After being informed of the station power save mode, the AP or Ad-Hoc master node perform legacy power save operations: they store packets for all (low-priority) stations in power save mode until the next scheduled wake up period. These packets according to one embodiment are e.g. provided to the intended stations at each beacon interval, by using the ATIM (Announcement Traffic Indication Map) window. This way, low-priority virtual stations will not experience packet losses during power save mode.

With the mechanism as described before, by putting one virtual instance in power saving mode reduces the queuing delay of the other virtual instance where the RT traffic is received or transmitted. As a result, locally and/or at the remote AP (or Ad-Hoc) peer, RT traffic gets a higher number of hardware queue slots and channel access opportunities, thus improving the overall RT traffic performance.

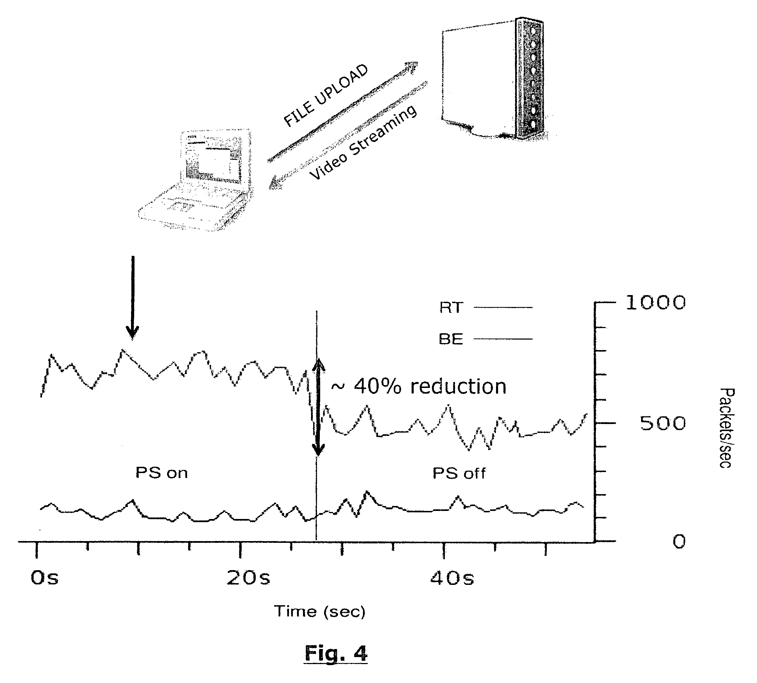

To prove the efficiency of the proposed scheme, in Fig. 4 there are provided the results obtained from an experimental test-bed in which one AP delivers two different flows to a legacy 802.11 station: one flow is represented by a RT video unicast streaming, while the other flow is represented by an FTP download session from the AP to the STA. As described in the embodiments of the invention, on the client side there are instantiated two virtual stations onto which there were mapped the two traffic flows. The AP is a legacy off-the-shelf access point. The plotted curves reports the total rate in packets/sec at the AP when it serves these two traffic flows sharing the same hardware and channel resources. As is visible from the figure, whenever the proposed mechanism is enabled (right-hand side), it automatically puts the best effort virtual station in power save mode, thus favouring RT downlink traffic over BE downlink traffic. Disabling the mechanism causes RT downlink traffic to experience a throughput reduction of about 30% in favour of the BE downlink. As a consequence, RT traffic will inevitably experience a quality degradation.

In the following it will be discussed under which scenarios (DSL/wireless bit-rates) the mechanism according to embodiments of the invention may be applied.

In the cases where the infrastructure behind an AP offers lower bit-rates than the wireless connection (e.g. up to 16Mbps DSL connection, AP set to 802.11a mode with 54Mbps, effectively ∼30Mbps), all the packets that reached the AP from the infrastructure have enough bandwidth to be transmitted over the wireless channel. However, in practical scenarios where (i) multiple users share the same wireless channel, (ii) some transmitters use low bit-rate modulation schemes, thus causing others to indirectly decrease their own modulation rate - this effect is commonly known in literature as "802.11 performance anomaly" [8] - the bit-rate available *per user* is often lower than in the infrastructure behind the AP.

Therefore the mechanism described before applies to those very common scenarios.

Regarding security and authorization issues, the following is noted.

In the proposed mechanism, a given user can be using two or more IP/MAC addresses. The authentication method (e.g. Radius) may limit the user to a single IP/MAC address per user, which is typically the case in non-free hotspots. In such a case this option could or should be altered in the authentication server. The problem, however, does not exist in home, corporate, or free hotspot scenarios.

With the embodiments described before users are enabled to automatically assign priorities to different traffic flows and get service differentiation even though APs or STAs which do not support it. Therefore the negative impact of low priority flows on a high priority flow can be reduced if the flows share the same physical hardware resource.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention. An apparatus implementing an embodiment of the invention may e.g. comprise a computing device or a mobile phone or any mobile device or mobile station or node which is suitably programmed such that it is able to carry out a method as described in the embodiments of the invention.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

## Claims

1. A method for differentiating a plurality traffic flows according to their priority, said flows sharing one physical network device which communicates with one or more other devices in a wireless network, said method comprising:
providing a plurality of virtual network devices which split said one physical network device into said plurality of virtual network devices;
mapping the plurality of traffic flows onto the plurality of different virtual network devices, respectively;
putting one of said virtual network devices which corresponds to a flow having a lower priority into a sleep mode or doze mode or power save mode to thereby reduce an impact which the traffic flow having lower priority has on the traffic flow having higher priority;
**characterized in that**
said method further comprising:
monitoring or checking any parameter which is indicative of the higher priority flow being affected by the lower priority flow to such an extent that the virtual network device corresponding to said lower priority flow should be put into the power save mode,
wherein said parameter comprises:
the queuing delay of the high priority flow.

2. The method of claim 1, further comprising:
entering the power save mode or sleep more or doze mode by a remote virtual network device in response to the detection by said remote virtual network device which corresponds to a low priority traffic flow that a virtual network device of said plurality of virtual network devices has already entered the power save mode or sleep more or doze mode.

3. The method of one of the preceding claims, wherein said plurality of virtual network devices is generated in response to one, any, or any combination of the following:
whenever a real-time application is started;
whenever the first real-time packet is generated;
whenever high-priority traffic sharing the hardware transmit queue with low-priority traffic experiences excessive delays;
whenever a parameter indicative of a high priority flow being affected by a low priority flow which shares the same hardware queue exceeds a certain threshold.

4. The method of one of the preceding claims, further comprising:
transmitting by the virtual network device corresponding to the lower-priority flow a message to its communication partner or to other remote virtual network devices indicating that it is in or goes into the power save mode or sleep more or doze mode.

5. An apparatus for differentiating a plurality traffic flows according to their priority, said flows sharing one physical network device which is adapted to communicate with one or more other devices in a wireless network, said apparatus comprising:
a module for providing a plurality of virtual network devices which are adapted to split said one physical network device into said plurality of virtual network devices;
a module for mapping the plurality of traffic flows onto the plurality of different virtual network devices, respectively;
a module for putting one of said virtual network devices which corresponds to a flow having a lower priority into a sleep mode or doze mode or power save mode to thereby reduce an impact which the traffic flow having lower priority has on the traffic flow having higher priority,
said apparatus further being **characterized by** comprising:
a module for monitoring or checking any parameter which is indicative of the higher priority flow being affected by the lower priority flow to such an extent that the virtual network device corresponding to said lower priority flow should be put into the power save mode,
wherein said parameter comprises:
the queuing delay of the high priority flow.

6. The apparatus of claim 5, further comprising:
a module for entering the power save mode or sleep more or doze mode by a remote virtual network device in response to the detection by said remote virtual network device which corresponds to a low priority traffic flow that a virtual network device of said plurality of virtual network devices has already entered the power save mode or sleep more or doze mode.

7. The apparatus of one of claims 5 to 6, said apparatus being adapted such that said plurality of virtual network devices is generated in response to one, any, or any combination of the following:
whenever a real-time application is started;
whenever the first real-time packet is generated;
whenever high-priority traffic sharing the hardware transmit queue with low-priority traffic experiences excessive delays;
whenever a parameter indicative of a high priority flow being affected by a low priority flow which shares the same hardware queue exceeds a certain threshold.

8. The apparatus of one of claims 5 to 7, further comprising:
a module for transmitting by the virtual network device corresponding to the lower-priority flow a message to its communication partner or to other remote virtual network devices indicating that it is in or goes into the power save mode or sleep more or doze mode.

9. A computer program comprising computer program code which when being executed on a computer enables said computer to carry out all the steps of the method according to one of claims 1 to 4.

## Patentansprüche

1. Ein Verfahren zum Differenzieren einer Mehrzahl von Netzwerkflüssen gemäß ihrer Priorität, wobei die Flüsse eine physikalische Netzwerkvorrichtung teilen, die mit einer oder mehreren anderen Vorrichtungen in einem drahtlosen Netzwerk kommuniziert, wobei das Verfahren aufweist:
Vorsehen einer Mehrzahl von virtuellen Netzwerkvorrichtungen, die die eine physikalische Netzwerkvorrichtung in die Mehrzahl von virtuellen Netzwerkvorrichtungen aufspalten;
Mappen der Mehrzahl von Verkehrsflüssen jeweils auf die Mehrzahl von unterschiedlichen virtuellen Netzwerkvorrichtungen;
Versetzen von einer der virtuellen Netzwerkvorrichtungen, die einem Fluss mit einer niedrigeren Priorität entspricht, in einen Schlafmodus oder Dämmermodus oder Stromsparmodus, und **dadurch** einen Einfluss zu reduzieren, den der Verkehrsfluss mit niedrigerer Priorität auf den Verkehrsfluss mit höherer Priorität hat;
**dadurch gekennzeichnet, dass**
das Verfahren ferner aufweist: Überwachen oder Überprüfen eines Parameters, der anzeigt, dass der Fluss mit höherer Priorität beeinflusst wird durch den Fluss mit niedrigerer Priorität, und zwar in solchem Ausmaß, dass der Fluss mit niedrigerer Priorität in einen Stromsparmodus versetzt werden sollte,
wobei der Parameter aufweist:
die Warteschlangenverzögerung des Flusses mit höherer Priorität.

2. Das Verfahren nach Anspruch 1, ferner aufweisend:
Eintritt in den Stromsparmodus oder Schlafmodus oder Dämmermodus durch eine entfernte virtuelle Netzwerkvorrichtung in Reaktion auf die Detektion durch die entfernte virtuelle Netzwerkvorrichtung, die einem Verkehrsfluss niedriger Priorität entspricht, dass eine virtuelle Netzwerkvorrichtung der Mehrzahl von virtuellen Netzwerkvorrichtungen bereits in den Stromsparmodus oder Schlafmodus oder Dämmermodus eingetreten ist.

3. Das Verfahren nach einem der vorhergehenden Ansprüche, wobei die Mehrzahl von virtuellen Netzwerkvorrichtungen erzeugt wird in Reaktion auf eines oder eine Kombination der Folgenden:
wann immer eine Echtzeitanwendung gestartet wird;
wann immer das erste Echtzeitpaket erzeugt wird;
wann immer ein Verkehr hoher Priorität, der die Hardware-Übertragungsqueue mit Verkehr niedriger Priorität teilt, exzessive Verzögerungen erfährt;
wann immer ein Parameter, der anzeigt, dass ein Fluss hoher Priorität beeinflusst wird durch einen Fluss niedriger Priorität, der dieselbe Hardware-Queue teilt, einen bestimmten Schwellwert überschreitet.

4. Das Verfahren nach einem der vorhergehenden Ansprüche, ferner aufweisend:
Übertragen einer Nachricht durch die virtuelle Netzwerkvorrichtung, die dem Fluss mit niedrigerer Priorität entspricht, an ihre Kommunikationspartner oder entfernte virtuelle Netzwerkvorrichtungen, die angibt, dass sie sich im Stromsparmodus oder im Schlafmodus oder im Dämmermodus befindet oder in diesen eintritt.

5. Eine Vorrichtung zum Differenzieren einer Mehrzahl von Verkehrsflüssen gemäß ihrer Priorität, wobei die Flüsse eine gemeinsame physikalische Netzwerkvorrichtung teilen, die angepasst ist, mit einem oder mehreren anderen Vorrichtungen in einem drahtlosen Netzwerk zu kommunizieren, wobei die Vorrichtung aufweist:
ein Modul zum Vorsehen einer Mehrzahl von virtuellen Netzwerkvorrichtungen, die angepasst sind, die eine physikalische Netzwerkvorrichtung in die Mehrzahl von virtuellen Netzwerkvorrichtungen aufzuspalten;
ein Modul, um die Mehrzahl von Verkehrsflüssen jeweils auf die Mehrzahl von unterschiedlichen virtuellen Netzwerkvorrichtungen zu mappen;
ein Modul, um eine der virtuellen Netzwerkvorrichtungen, die einem Fluss mit niedrigerer Priorität entspricht, in einen Schlafmodus oder einen Dämmermodus oder einen Stromsparmodus zu versetzen, um **dadurch** einen Einfluss, den der Verkehrsfluss mit niedrigerer Priorität auf den Verkehrsfluss mit höherer Priorität hat, zu reduzieren,
wobei die Vorrichtung ferner **gekennzeichnet ist dadurch**, dass sie aufweist:
ein Modul zum Überwachen oder Überprüfen irgendeines Parameters, der angibt, dass der Fluss höherer Priorität beeinflusst wird **durch** den Fluss niedrigerer Priorität, und zwar in solchem Ausmaß, dass die virtuelle Netzwerkvorrichtung, die dem Fluss niedrigerer Priorität entspricht, in den Stromsparmodus versetzt werden sollte,
wobei der Parameter aufweist:
die Warteschlangenverzögerung des Flusses höherer Priorität.

6. Die Vorrichtung nach Anspruch 5, ferner aufweisend:
ein Modul, um durch eine entfernte virtuelle Netzwerkvorrichtung in den Stromsparmodus oder Schlafmodus oder Dämmermodus einzutreten, und zwar in Reaktion auf die Detektion durch die entfernte virtuelle Netzwerkvorrichtung, die einen Fluss niedrigerer Priorität entspricht, dass eine virtuelle Netzwerkvorrichtung der Mehrzahl von virtuellen Netzwerkvorrichtungen bereits in den Stromsparmodus oder Schlafmodus oder Dämmermodus eingetreten ist.

7. Die Vorrichtung nach Anspruch 5 oder 6, wobei die Vorrichtung angepasst ist, so dass die Mehrzahl von virtuellen Netzwerkvorrichtungen erzeugt wird in Reaktion auf eine, irgendeine oder irgendeine Kombination der Folgenden:
wann immer eine Echtzeitapplikation gestartet wird;
wann immer das erste Echtzeitpaket erzeugt wird;
wann immer ein Verkehr hoher Priorität, der die Hardware-Übertragungsqueue mit Verkehr niedriger Priorität teilt, exzessive Verzögerungen erfährt;
wann immer ein Parameter, der angibt, dass ein Fluss hoher Priorität beeinflusst wird durch einen Fluss niedriger Priorität, der gleiche Hardware-Queue teilt, einen vorbestimmten Schwellwert überschreitet.

8. Die Vorrichtung nach einem der Ansprüche 5 bis 7, ferner aufweisend:
ein Modul, um durch die virtuelle Netzwerkvorrichtung, die dem Fluss niedriger Priorität entspricht, eine Nachricht an seine Kommunikationspartner oder andere virtuelle Netzwerkvorrichtungen zu übertragen, die angibt, dass sie sich im Stromsparmodus oder Schlafmodus oder Dämmermodus befindet oder in diesen eintritt.

9. Ein Computerprogramm aufweisend Computerprogrammcode, der, wenn er auf einem Computer ausgeführt wird, den Computer in die Lage versetzt, alle Schritte des Verfahrens gemäß einem der Ansprüche 1 bis 4 auszuführen.

## Revendications

1. Procédé pour différencier une pluralité de flux de trafic selon leur priorité, lesdits flux partageant un dispositif de réseau physique qui communique avec un ou plusieurs autres dispositifs dans un réseau sans fil, ledit procédé comprenant les étapes consistant à :
fournir une pluralité de dispositifs de réseau virtuel qui partagent ledit dispositif de réseau physique en ladite pluralité de dispositifs de réseau virtuel ;
mapper la pluralité de flux de trafic sur la pluralité de dispositifs de réseau virtuel différents, respectivement ;
placer l'un desdits dispositifs de réseau virtuel qui correspond à un flux ayant une priorité inférieure dans un mode de veille ou un mode de sommeil ou un mode d'économie d'énergie pour réduire ainsi un impact que le flux du trafic ayant une priorité inférieure a sur le flux de trafic ayant une priorité supérieure ;
**caractérisé en ce que**
ledit procédé comprend en outre l'étape consistant à :
surveiller ou contrôler tout paramètre qui est indicatif de l'affectation du flux de priorité supérieure par le flux de priorité inférieure dans une mesure telle que le dispositif de réseau virtuel correspondant audit flux de priorité inférieure doit être placé dans le mode d'économie d'énergie,
dans lequel ledit paramètre comprend :
le délai d'attente du flux de haute priorité.

2. Procédé selon la revendication 1, comprenant en outre l'étape consistant à :
entrer dans le mode d'économie d'énergie ou le mode de veille ou le mode de sommeil par un dispositif de réseau virtuel éloigné en réponse à la détection par ledit dispositif de réseau virtuel éloigné qui correspond à un flux de trafic de priorité basse du fait qu'un dispositif de réseau virtuel de ladite pluralité de dispositifs de réseau virtuel est déjà entré dans le mode d'économie d'énergie ou le mode de veille ou le mode de sommeil.

3. Procédé selon l'une des revendications précédentes, dans lequel ladite pluralité de dispositifs de réseau virtuel est générée en réponse à un élément des suivants, un élément quelconque ou toute combinaison d'entre eux ;
chaque fois qu'une application en temps réel est démarrée ;
chaque fois que le premier paquet en temps réel est généré ;
chaque fois qu'un trafic de haute priorité partageant la file d'attente de transmission matérielle avec un trafic de basse priorité subit des retards excessifs ;
chaque fois qu'un paramètre indiquant un flux de haute priorité affecté par un flux de basse priorité qui partage la même file d'attente matérielle dépasse un certain seuil.

4. Procédé selon l'une des revendications précédentes, comprenant en outre l'étape consistant à :
transmettre par le dispositif de réseau virtuel correspondant au flux de priorité inférieure un message à son partenaire de communication ou à d'autres dispositifs réseau virtuel éloignés indiquant qu'il est ou qu'il se dirige dans le mode d'économie d'énergie ou le mode de veille ou le mode de sommeil.

5. Appareil pour différencier une pluralité de flux de trafic selon leur priorité, lesdits flux partageant un dispositif de réseau physique qui est adapté pour communiquer avec un ou plusieurs autres dispositifs dans un réseau sans fil, ledit appareil comprenant :
un module permettant de fournir une pluralité de dispositifs de réseau virtuel qui sont adaptés pour partager ledit dispositif de réseau physique en ladite pluralité de dispositifs de réseau virtuel ;
un module permettant de mapper la pluralité de flux de trafic sur la pluralité de dispositifs de réseau virtuel différents, respectivement ;
un module permettant de placer l'un desdits dispositifs de réseau virtuel qui correspond à un flux ayant une priorité inférieure dans un mode de veille ou un mode de sommeil ou un mode d'économie d'énergie pour réduire ainsi un impact que le flux de trafic ayant une priorité inférieure a sur le flux de trafic ayant une priorité supérieure,
ledit appareil étant **caractérisé en outre en ce qu'**il comprend :
un module permettant de surveiller ou contrôler tout paramètre qui est indicatif de l'affection du flux de priorité supérieure par le flux de priorité inférieure dans une mesure telle que le dispositif de réseau virtuel correspondant audit flux de priorité inférieure doit être placé dans le mode d'économie d'énergie,
dans lequel ledit paramètre comprend :
le délai d'attente du flux de haute priorité.

6. Appareil selon la revendication 5, comprenant en outre :
un module permettant d'entrer dans le mode d'économie d'énergie ou le mode de veille ou le mode de sommeil par un dispositif de réseau virtuel éloigné en réponse à la détection par ledit dispositif de réseau virtuel éloigné qui correspond à un flux de trafic de priorité basse du fait qu'un dispositif de réseau virtuel de ladite pluralité de dispositifs de réseau virtuel est déjà à entré dans le mode d'économie d'énergie ou le mode de veille ou le mode de sommeil.

7. Appareil selon l'une des revendications 5 à 6, ledit appareil étant adapté de telle sorte que ladite pluralité de dispositifs de réseau virtuel est générée en réponse à un élément des suivants, un élément quelconque ou toute combinaison d'entre eux :
chaque fois qu'une application en temps réel est démarrée ;
chaque fois que le premier paquet en temps réel est généré ;
chaque fois qu'un trafic de haute priorité partageant la file d'attente de transmission matérielle avec un trafic de basse priorité subit des retards excessifs ;
chaque fois qu'un paramètre indiquant un flux de haute priorité affecté par un flux de basse priorité qui partage la même file d'attente matérielle dépasse un certain seuil.

8. Appareil selon l'une des revendications 5 à 7, comprenant en outre :
un module permettant de transmettre par le dispositif de réseau virtuel correspondant au flux de priorité inférieure un message à son partenaire de communication ou à d'autres dispositifs réseau virtuel éloigné indiquant qu'il est ou qu'il se dirige dans le mode d'économie d'énergie ou le mode de veille ou le mode de sommeil.

9. Programme informatique comprenant un code de programme informatique qui, une fois exécuté sur un ordinateur, permet audit ordinateur de réaliser toutes les étapes du procédé selon l'une des revendications 1 à 4.
